# EUROPEAN PATENT SPECIFICATION

(11) **EP 3 231 852 B1**
(45) Date of publication and mention of the grant of the patent: **29.04.2020**
(21) Application number: 16865557.9
(22) Date of filing: 25.07.2016
(51) Int. Cl.: C09K 8/68, C09K 8/60, C09K 8/88, C09K 8/90

(54) **MULTIFUNCTIONAL COMPOSITE FRACTURING FLUID SYSTEM**
MULTIFUNKTIONELLES KOMPOSITFRAKTURIERUNGSFLÜSSIGKEITSSYSTEM
SYSTÈME DE FLUIDE DE FRACTURATION COMPOSITE MULTIFONCTIONNEL

(30) Priority: 19.11.2015 CN 201510801786
(43) Date of publication of application: 18.10.2017
(73) Proprietor: Sichuan Guangya Polymer Chemical Co., Ltd., Nanchong, Sichuan 637500 (CN)
(72) Inventor: GUO, Yongjun, Nanchong Sichuan 637500 (CN); LUO, Pingya, Nanchong Sichuan 637500 (CN); WANG, Xiang, Nanchong Sichuan 637500 (CN); LIU, Kuan, Nanchong Sichuan 637500 (CN)
(74) Representative: Hirsch & Associés
(86) International application number: PCT/CN2016/091590
(87) International publication number: WO 2017/084379

(56) References cited:
- WO-A1-2012/069477
- WO-A1-2014/183495
- CN-A- 103 224 779
- CN-A- 103 468 237
- CN-A- 104 177 534
- CN-A- 105 219 372
- REINICKE A ET AL: "Hydraulic fracturing stimulation techniques and formation damage mechanisms-Implications from laboratory testing of tight sandstone-proppant systems", CHEMIE DER ERDE - GEOCHEMISTRY, ELSEVIER, AMSTERDAM, NL, vol. 70, 1 August 2010 (2010-08-01), pages 107-117, XP027221553, ISSN: 0009-2819 [retrieved on 2010-08-01]
- RICHARD SIGAL ET AL: "Slick Water and Hybrid Fracs in the Bossier: Some Lessons Learnt", SPE ANNUAL TECHNICAL CONFERENCE AND EXHIBITION, 26-29 SEPTEMBER 2004, HOUSTON, TEXAS, 1 January 2004 (2004-01-01), pages 26-29, XP55472722, USA DOI: 10.2118/89876-MS ISBN: 978-1-55563-151-2

## Description

### FIELD

The present invention relates to the field of hydrocarbon reservoir fracturing reformation technology, in particular to a multi-functional hybrid fracturing fluid system suitable for tight hydrocarbon reservoirs and shale hydrocarbon reservoirs.

### BACKGROUND

The world's unconventional oil and gas resources are abundant, of which the proportion of low permeability and ultra-low permeability oil and gas reservoirs is huge. Due to the low permeability and low porosity of low permeability oil and gas reservoirs, it is necessary to stimulate it to form a complex fracture network, so as to increase the yield. The stimulation of the low permeability oil and gas reservoirs in the world is mainly based on hydraulic fracturing technology, and the commonly used fracturing fluid is guar gum fracturing fluid. When using guar gum as a thickener, in order to reach a sufficient viscosity to meet the requirement of sand carrying, usually a cross-linking agent need to be added, through chemical cross-linking a gel fracturing fluid system is formed. But the gel fracturing fluid system is not broken completely, and the content of water insoluble matter in guar gum thickener is high, thus high amount of residue after breaking will damage the formation. At the same time, because the gel fracturing fluid system is formed by cross-linking technology, this type of jel system is not resistant to shear, so it is not suitable for large-scale fracturing which requires resistant to shear for a long time, or high shear rate tubing, coiled tubing and jet fracturing. Furthermore, high viscosity and high construction friction of gel fracturing fluid system increase the load of fracturing equipments, which is not advantageous to deep well stimulation.

In recent years, slick water fracturing technology has been used in the Stimulated Reservoir Volume (SRV) in many low permeability oil and gas reservoirs (especially shale gas reservoirs) on the stratum volume reconstruction, which achieved a better yield and increased the injection effect. The so-called slick water fracturing is the fracturing operation in the low permeability oil and gas reservoir reformation, by adding friction-reducing agent (anionic polymer or low concentration of guar gum, etc.), active agent, clay stabilizer or linear gel to water, serving as a working fluid. Document WO2014183495 describes a fracturing fluid thickener derived from the monomers acrylamide, an anionic monomer chosen from acrylate, methacrylate, vinylsulfonate and acrylamidomethylpropanesulfonate and an amphiphilic monomer, where the amphiphilic monomer comprises a dimethyl-allyl-ammonium chloride or an alkyl methacrylate carrying a C8-C22 alkyl chain. The published journal article "Hydraulic fracturing stimulation techniques and formation damage mechanisms - implications from laboratory testing of tight sandstone-proppant systems, CHEMIE DER ERDE - GEOCHEMISTRY, ELSEVIER, vol. 70, 1/08/2010, pages 107-117" shows an overview of fracturing techniques.

Slick water fracturing can generate a long complex fracture network, but the effective length of the propped fracture will change greatly with the concentration of the proppant and the laying effect. The concentration of the proppant in the slick water fracturing fluid is low, so the fracture conductivity is poor. Later, a new fracturing method-hybrid slick water fracturing technology, which combined gel fracturing technology with slick water fracturing technology, was proposed. The technique involves mainly a large displacement injection of slick water, so that the natural fractures in the formation produce a shear slip, and secondary fractures appear on the side of the fractures, thus a long complex fracture network is formed. A proppant with low sand rate is carried in to support micro fractures. A suspension with high sand proportion using gel carries a proppant with high sand ratio into the formation, supporting the main fractures, thus a better fracture conductivity is formed.

At present, slick water is mainly prepared by using anionic polymer, low concentration of guar gum or linear gel as friction-reducing agent, and using guar gum and other natural polymers and synthetic polymers as a thickener, so as to form a gel system as a sand carrying fluid with high sand ratio. But the additives for slick water and gel fracturing fluid are different; in order to meet the needs of various formations, many types of additives are used, resulting in the difficulty in the quality control of raw materials during procurement; at the same time the preparation process for the fluid is also complex (especially in the large-scale Stimulated Reservoir Volume (SRV) process). These consume a lot of manpower and material resources. In addition, with the continuous improvement of environmental requirements and the lack of water resources, what needs to be considered is to reduce the amount of working fluid required for increasing the yield of fracturing fluid, while achieving "zero discharge" of the working fluid wastewater of fracturing fluid. All the flowback liquid after fracturing needs to be treated, recycled or re-injected into the formation. Because there are many types of additives added to the fracturing fluid, which makes the composition of the flowback liquid is complicated, the cost of recycle and processing is high.

### SUMMARY

In view of the above, the technical problem to be solved by present invention is to provide a multi-functional hybrid fracturing fluid system which is simple to prepare and environmentally friendly.

The present invention provides use of an associative polymer as friction-reducing agent and thickener, which is a modified natural associative polymer and/or an organic synthetic associative polymer.

A multi-functional hybrid fracturing fluid system is also provided in the present invention, comprising slick water and high viscosity sand carrying fluid.

By mass percentage, said slick water contains 0.02%∼0.15% of friction-reducing agent.

By mass percentage, said high viscosity sand carrying fluid contains 0.2%∼0.75% of thickener.

Said friction-reducing agent and thickener are the same associative polymer which is a modified natural associative polymer and/or an organic synthetic associative polymer.

Preferably, said modified natural associative polymer is selected from one or more of hydrophobically modified cellulose polymers, hydrophobically modified starch polymers and hydrophobically modified xanthan gum; said organic synthetic associative polymer is hydrophobically modified polyacrylamide and/or derivatives thereof.

Preferably, by mass percentage, said slick water comprises 0.02%∼0.15% of friction-reducing agent, 0.05%∼0.3% of enhancer, 0.2%∼2% of clay stabilizer, and water solvent as the balance.

Preferably, by mass percentage, said high viscosity sand carrying fluid comprises 0.2%∼0.75% of thickener, 0.1%∼0.4% of enhancer, 0.3%∼2% of clay stabilizer, 0.03%∼0.4% of gel breaker, and water solvent as the balance.

Said friction-reducing agent and said thickener are the same associative polymer which is modified natural associative polymer or organic synthetic associative polymer; said enhancer in the slick water and said enhancer in the high viscosity sand carrying fluid is selected from one or more of anionic surfactants and nonionic surfactants, respectively.

Said water solvent in the slick water and said water solvent in the high viscosity sand carrying fluid is clear water or flowback liquid after treatment, respectively.

Preferably, said anionic surfactant is one or more of alkyl benzene sulfonates, alkyl sulfates and petroleum sulfonates; said nonionic surfactant is one or more of fatty acid polyoxyethylene ester, nonylphenol polyoxyethylene ether, polyether type surfactant and fatty alcohol polyoxyethylene ether.

Preferably, said clay stabilizer in the slick water and said clay stabilizer in the high viscosity sand carrying fluid is independently one or more of potassium chloride, ammonium chloride and non-ionic organic clay stabilizers, respectively.

Preferably, said gel breaker in the high viscosity sand carrying fluid is one or more of potassium persulfate, ammonium persulfate and encapsulated oxidative gel breaker.

Preferably, by mass percentage, said slick water comprises 0.04%∼0.15% of friction-reducing agent, 0.1%∼0.3% of enhancer, 0.3%∼2% of clay stabilizer, and clear water as the balance.

Preferably, by mass percentage, said slick water comprises 0.08% of friction-reducing agent, 0.2% of enhancer, 1% of clay stabilizer, and clear water as the balance.

Preferably, by mass percentage, said slick water comprises 0.02%∼0.1% of friction-reducing agent, 0.05%∼0.25% of enhancer, 0.2%∼1.5% of clay stabilizer, and flowback liquid after treatment.

Preferably, by mass percentage, said high viscosity sand carrying fluid comprises 0.25%∼0.75% of thickener, 0.15%∼0.4% of enhancer, 0.3%∼2% of clay stabilizer, 0.03%∼0.4% of oxidative gel breaker, and clear water as the balance.

Preferably, by mass percentage, said high viscosity sand carrying fluid comprises 0.35% of thickener, 0.2% of enhancer, 1% of clay stabilizer, 0.15% of oxidative gel breaker, and clear water as the balance.

Preferably, by mass percentage, said high viscosity sand carrying fluid comprises 0.2%∼0.65% of thickener, 0.1%∼0.3% of enhancer, 0.3%∼1.5% of clay stabilizer, 0.03%∼0.4% of oxidative gel breaker, and flowback liquid after treatment as the balance.

The present invention also provides use of a multi-functional hybrid fracturing fluid system in the Stimulated Reservoir Volume (SRV) of tight hydrocarbon reservoir and shale hydrocarbon reservoir.

The present invention provides a multi-functional hybrid fracturing fluid system which comprises slick water and high viscosity sand carrying fluid. By mass percentage, said slick water comprises 0.02%∼0.15% of friction-reducing agent; by mass percentage, said high viscosity sand carrying fluid comprises 0.2%∼0.75% of thickener; said friction-reducing agent and thickener are the same associative polymer which is modified natural associative polymers and/or organic synthetic associative polymers. The present invention uses low concentration associative polymer which has a good friction reduction performance and high concentration associative polymer which has a good sand carrying characteristic to form a multi-functional hybrid fracturing fluid system. The system uses low concentration associative polymer as a friction-reducing agent to prepare slick water and uses high concentration associative polymer to prepare high viscosity sand carrying fluid, achieving multiple functions of an associative polymer. Compared with the existing "polyacrylamide or linear gel slick water" + "guar gum fracturing fluid" complex fracturing fluid system, multi-functional hybrid fracturing fluid system has a better performance of sand suspending, thus reducing the amount of sand carrying fluid in slick water and the total amount of fracturing fluid. At the same time, the operation friction of slick water is low, capable of meeting the requirements of large displacement operation; high viscosity sand carrying fluid has a high resistance to shear and a low residue content after gel breaking, so the damage to formation is low. The multi-functional hybrid fracturing fluid system is simple in formula, less additive type, has an easy preparation process, and can save a great amount of manpower and material resources in fracturing operation. Since the composition of this system is simple, the flowback liquid can be re-formulated to fracturing fluid after flocculation, sedimentation, filtration and other simple treatments, reducing the amount of additives while improving the utilization rate of water for fracturing.

### BRIEF DESCRIPTION OF THE DRAWINGS

Fig. 1 is a graph showing the relationship between friction of slick water and displacement.
Fig. 2 is a graph showing the friction reduction rates of the slick waters of the present invention.
Fig. 3 is a graph showing shearing resistance of the high viscosity sand carrying fluids of the present invention.
Fig. 4 is a graph showing the static suspended sand in the high viscosity sand carrying fluids of the present invention at different times.
Fig. 5 is a graph showing the static suspended sand in the high viscosity sand carrying fluids of the present invention at different times.
Fig. 6 is a graph showing friction reduction rates of the high viscosity sand carrying fluids of the present invention.
Fig. 7 is a graph showing shearing resistance of the high viscosity sand carrying fluids of the present invention.

### DETAILED DESCRIPTION OF THE INVENTION

The technical solution in the examples of the present invention will be described in detail below in connection with the accompanying drawings of the examples of the present invention. Apparently, the described examples are merely part of the present invention, and not all examples. All other examples obtained by those of ordinary skill in the art without making creative work are within the scope of the present invention, based on the examples in the present invention.

The present invention provides use of an associative polymer as friction-reducing agent and thickener, wherein the associative polymer is a modified natural associative polymer and/or an organic synthetic associative polymer. Preferably, said modified natural associative polymer is one or more of hydrophobically modified cellulose polymers, hydrophobically modified starch polymers and hydrophobically modified xanthan gum; more preferably, one or more of alkyl, esters and nitro-hydrophobic groups modified cellulose polymers, starch polymers and xanthan gum; even more preferably, one or more of alkyl hydrophobically modified hydroxyethyl cellulose. Preferably, said organic synthetic associative polymer is hydrophobically modified polyacrylamide and/or derivatives thereof; more preferably, alkyl, esters and nitro-hydrophobic groups modified polyacrylamide and/or derivatives thereof.

A multi-functional hybrid fracturing fluid system is also provided in the present invention, comprising slick water and high viscosity sand carrying fluid;
By mass percentage, said slick water contains 0.02%∼0.15% of friction-reducing agent;
By mass percentage, said high viscosity sand carrying fluid contains 0.2%∼0.75% of thickener;
Said friction-reducing agent and thickener are the same associative polymer which is the same as described above and will not be described further herein.

According to the present invention, by mass percentage, said slick water comprises 0.02%∼0.15% of friction-reducing agent, 0.05%∼0.3% of enhancer, 0.2%∼2% of clay stabilizer, and water solvent as the balance; by mass percentage, said high viscosity sand carrying fluid comprises 0.2%∼0.75% of thickener, 0.1%∼0.4% of enhancer, 0.3%∼2% of clay stabilizer, 0.03%∼0.4% of gel breaker, and water solvent as the balance. The enhancer in the slick water or the enhancer in the high viscosity sand carrying fluid is each independently one or more of anionic surfactants and nonionic surfactants; the water solvent in the slick water or the water solvent in the high viscosity sand carrying fluid is clear water as the balance or flowback liquid after treatment, respectively.

According to the present invention, the amount of the associative polymer as a friction-reducing agent in said slick water is preferably 0.04%∼0.15%; said associative polymer is the same as described above and will not be described further herein. In the slick water of the multi-functional composition fracturing fluid system of the present invention, the associative polymer is used as a friction-reducing agent to reduce the friction in the whole solution pumping process and reduce the operation pressure during the fracturing operation. The friction reduction effect of the slick water is often associative with the concentration of friction-reducing agent. The friction reduction rate is usually increased first and then decreased with the increase of friction-reducing agent concentration. So the amount of friction-reducing agent needs to be limited to a certain range.

Enhancer in the slick water can reduce the surface tension of the slick water, make the slick water after fracturing operation return easily and reduce the external fluid damage to the formation. With the increase of the amount of enhancer used, the solution surface tension is often reduced constantly. The content of the enhancer in the slick water of the present invention is preferably 0.1%∼0.3%; said enhancer is one or more of anionic surfactants and nonionic surfactants. Said anionic surfactants are known to those of ordinary skill in the art and are not particularly limited. Preferably, in the present invention, the anionic surfactants are alkylbenzene sulfonate, alkyl sulfate, petroleum sulfonate; said sulfate salt is preferably C10∼C15 alkyl sulfate salt; said alkylbenzene sulfonate is preferably C10∼C20 alkylbenzene sulfonate salt. Said nonionic surfactants are those known to those of ordinary skill in the art and are not particularly limited. Preferably, in the present invention, the nonionic surfactant is one or more of fatty acid polyoxyethylene ester, nonylphenol ethoxylates, alkylphenol polyoxyethylene ethers, polyether type surfactants, fatty alcohol polyoxyethylene ether; wherein, the number of carbon atoms of fatty acid in said fatty acid polyoxyethylene ester is preferably from 13 to 20; the number of carbon atoms of the alkyl group in said alkylphenol polyoxyethylene ether is preferably from 10 to 20; the number of carbon atoms of the fatty alcohol in said fatty alcohol polyoxyethylene ether is preferably from 10 to 20; the polymerization degree of polyoxyethylene in fatty acid polyoxyethylene ester, alkylphenol polyoxyethylene ethers and fatty alcohol polyoxyethylene ether is preferably from 7 to 20, more preferably from 7 to 15, respectively; and said polyether type surfactant is preferably a polyether-based surfactant in which polyoxyethylene-polyoxypropylene is copolymerized.

The clay stabilizer in slick water can inhibit the water swelling of the clay minerals and prevent the clay minerals in the reservoir from experiencing swelling in the fracturing fluid thereby avoiding the damage to reservoir. The adding amount of clay stabilizer is generally related to the clay mineral content in the reservoir. The clay stabilizer matched with the associative polymer thickener in the slick water is preferably one or more of potassium chloride, ammonium chloride and nonionic organic clay stabilizers; more preferably, potassium chloride and/or ammonium chloride.

Said water solvent can be clear water or flowback liquid after treatment, and there is no particular limit. Said flowback liquid after treatment is the flowback liquid after flocculation, sedimentation, filtration and other simple treatments, which is well-known to one of ordinary skill in the art and there is no particularly limit.

In some embodiments of the present invention, by mass percentage, said slick water comprises 0.08% of friction-reducing agent, 0.2% of enhancer, 1% of clay stabilizer, and water solvent as the balance.

Since the slick water of present invention is simple in composition, so the flowback liquid can be re-formulated to fracturing fluid after flocculation, sedimentation, filtration and other simple treatments, improving the utilization rate of fracturing water. When using flowback liquid to prepare slick water, because there are still a small amount of additives therein, the performance may not meet the application requirements, it is also necessary to add a variety of additives to achieve the property of slick water. By mass percentage, said slick water comprises 0.02%∼0.1% of friction-reducing agent, 0.05%∼0.25% of enhancer, 0.2%∼1.5% of clay stabilizer, and flowback liquid after treatment as the balance. In some embodiments of the present invention, said slick water comprises 0.06% of friction-reducing agent, 0.15% of enhancer, 0.5% of clay stabilizer, and flowback liquid after treatment as the balance.

According to the present invention, said multi-functional hybrid fracturing fluid system also contains high viscosity sand carrying fluid. By mass percentage, said high viscosity sand carrying fluid comprises 0.2%∼0.75% of thickener, 0.1%∼0.4% of enhancer, 0.3%∼2% of clay stabilizer, 0.03%∼0.4% of gel breaker, and water solvent as the balance.

Said thickener in the high viscosity sand carrying fluid is the same associative polymer as the friction-reducing agent which is described above and will not be described further herein. Said thickener in the high viscosity sand carrying fluid is one or more of anionic surfactants and nonionic surfactants; said water solvent in the high viscosity sand carrying fluid is clear water or flowback liquid after treatment; and said gel breaker is one or more of potassium persulfate, ammonium persulfate and encapsulated oxidative gel breaker.

Herein, said thickener, enhancer and clay stabilizer in the high viscosity sand carrying fluid are the same as described above and will not be described further.

The content of said enhancer in the high viscosity sand carrying fluid of the present invention is preferably 0.25%∼0.75%, more preferably 0.35%∼0.6%, even more preferably 0.35%∼0.4%. As a thickener in the high viscosity sand carrying fluid, associative polymer can be used to improve the viscosity of the liquid to meet the requirements of on-site sand carrying. The adding amount of the enhancer increases with the increase of oil and gas reservoir temperature in which it is used. It is used in conjunction with some surfactants to increase the sand carrying performance of sand carrying fluid, while also reducing the amount of the associative polymer, thereby saving costs.

The enhancer in the high viscosity sand carrying fluid can reduce the surface tension of sand carrying fluid, while also improving its sand carrying performance. The content of said enhancer in the high viscosity sand carrying fluid is preferably 0.15%∼0.4%, more preferably 0.2%∼0.3%.

The content of said clay stabilizer in the high viscosity sand carrying fluid is preferably 0.5%∼1.5%, more preferably 0.8%∼1.2%.

Gel breaker is used to hydrate and decompose the polymer after fracturing, reducing the viscosity of the sand carrying fluid, so that the liquid entering the formation after pressure can be flowback, thus reducing damage to the formation. The amount of gel breaker is generally determined by the formation temperature, decreasing with high formation temperature, and increasing with low formation temperature. The content of said oxidative gel breaker in the present invention is preferably 0.05%∼0.3%, more preferably 0.05%∼0.25%, even more preferably 0.05%∼0.2%, and most preferably 0.08%∼0.15%.

In some embodiments of the present invention, by mass percentage, said high viscosity sand carrying fluid comprises 0.35% thickener, 0.2% enhancer, 1% clay stabilizer, 0.15% oxidative gel breaker, and water solvent as the balance.

In some other embodiments of the present invention, by mass percentage, said high viscosity sand carrying fluid comprises 0.4% of thickener, 0.3% of enhancer, 1% of clay stabilizer, 0.08% of oxidative gel breaker, and water solvent as the balance.

Since the high viscosity sand carrying fluid of present invention is simple in composition, so the flowback liquid can be re-formulated to high viscosity sand carrying fluid after flocculation, sedimentation, filtration and other simple treatments, improving the utilization rate of fracturing water. When using flowback liquid to prepare high viscosity sand carrying fluid, because there are still a small amount of additives therein, the performance may not meet the application requirements, it is also necessary to add a variety of additives to achieve the property of high viscosity sand carrying fluid. By mass percentage, said high viscosity sand carrying fluid comprises 0.2%∼0.65% of thickener, 0.1%∼0.3% of enhancer, 0.3%∼1.5% of clay stabilizer, 0.03%∼0.4% of oxidative gel breaker, and flowback liquid after treatment as the balance.

In some embodiments of the present invention, said high viscosity sand carrying fluid comprises 0.32% of thickener, 0.15% of enhancer, 0.5% of clay stabilizer, 0.2% of oxidative gel breaker, and flowback liquid after treatment as the balance.

In some other embodiments of the present invention, said high viscosity sand carrying fluid comprises 0.37% of thickener, 0.25% of enhancer, 0.5% clay stabilizer, 0.08% oxidative gel breaker, and flowback liquid after treatment as the balance.

The multi-functional hybrid fracturing fluid system of the present invention comprises slick water and high viscosity sand carrying fluid. By adding low concentration of associative polymer as a friction-reducing agent in the water, in combination with the corresponding enhancer and clay stabilizer, the slick water can be prepared; by adding high concentrations of associative polymer as a thickener in the water, in combination with the corresponding enhancer, clay stabilizer and oxidative gel breaker, the sand carrying fluid can be prepared, thus a multi-purpose function of an associative polymer is achieved. The components of slick water and high viscosity sand carrying fluid are basically the same, which can improve the quality control of materials, simplify the preparation process, and save manpower and material resources in the fluid preparation.

The slick water in this multi-functional hybrid fracturing fluid system has a better performance of sand suspending, and can reduce the amount of sand carrying fluid in the slick water, thus reducing the total fluid amount in fracturing operation. The viscosity of the slick water is slightly higher than that of the conventional slick water, and can generate a higher net pressure, which is favorable to the shear and slip of the natural fractures and the formation and extension of the complex fractures. At the same time, the slick water has a high friction reduction rate and a low operation friction, thus reducing the operation pressure, meeting the requirements of large displacement operation.

The high viscosity sand carrying fluid in the multi-functional hybrid fracturing fluid system of the present invention belongs to non-cross linking fracturing fluid which has no need for cross-linking. It has advantages of high shearing resistance, low operation friction and low damage rate to formation. These can solve the problem of poor shearing resistance, high operation friction and high residue content caused by the gel fracturing fluid system.

At the mean time, the slick water and the high viscosity sand carrying fluid in the multi-functional hybrid fracturing fluid system are simple in formula, less additive type, have an easy preparation process. The flowback liquid can be re-formulated to fracturing fluid after flocculation, sedimentation, filtration and other simple treatments, improving the utilization rate of fracturing water.

The present invention further provides a method for preparing the slick water in the multi-functional hybrid fracturing fluid system, comprising mixing 0.02%∼0.15% of friction-reducing agent, 0.05%∼0.3% of enhancer, 0.2%∼2% of clay stabilizer by mass percentage and water as the balance, stirring, to obtain the slick water.

Herein, said friction-reducing agent, enhancer, clay stabilizer and water are the same as described above and will not be described further.

Preferably, friction-reducing agent, enhancer, and clay stabilizer are added to water, wherein the friction-reducing agent is added before the addition of the clay stabilizer. More preferably, friction-reducing agent, enhancer and clay stabilizer are added to water successively. Even most preferably, the slick water is prepared by adding the friction-reducing agent to water, stirring 2∼3min, adding enhancer and clay stabilizer, and stirring 1∼2min. Adding clay stabilizer before the addition of friction-reducing agent will lower the viscosity of the slick water.

The present invention further provides a method for preparing a method for preparing the high viscosity sand carrying fluid in the multi-functional hybrid fracturing fluid system, comprising mixing 0.2%∼0.75% of thickener, 0.1%∼0.4% of enhancer, 0.3%∼2% of clay stabilizer, 0.03%∼0.4% of oxidative gel breaker by mass percentage and water as the balance, stirring, to obtain the high viscosity sand carrying fluid.

Herein, said thickener, enhancer, clay stabilizer, oxidative gel breaker and water are the same as described above and will not be described further.

Preferably, thickener, enhancer, clay stabilizer, and oxidative gel breaker are added to water, wherein the thickener is added before the addition of the clay stabilizer. More preferably, the thickener is added to water first, then the enhancer and the clay stabilizer is added, and the oxidative gel breaker is added finally. Even most preferably, the high viscosity sand carrying fluid is prepared by adding thickener to water and stirring for 5∼6min; adding enhancer and clay stabilizer, further stirring for 2∼3min; adding oxidative gel breaker finally and stirring evenly.

The multi-functional hybrid fracturing fluid system of the present invention is simple in preparation method and relatively of low cost.

The present invention also provides use of the multi-functional hybrid fracturing fluid system in the reformation of tight hydrocarbon reservoir and shale hydrocarbon reservoir.

For further describe the present invention, the multi-functional hybrid fracturing fluid system provided by the present invention will be described in detail with reference to the following examples.

All the reagents in the following examples are available commercially.

### Example 1

The associative polymer used as a friction-reducing agent is 0.05% by weight of hydrophobically modified hydroxyethyl cellulose; the enhancer is 0.2% by weight of sodium dodecylbenzenesulfonate (sodium dodecylbenzenesulfonate); and the clay stabilizer is 1% by weight of KCl.

Water (clear water) for preparing the slick water was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 2∼3min; then the enhancer and clay stabilizer were added, and further stirred for 1∼2min, to obtain the slick water.

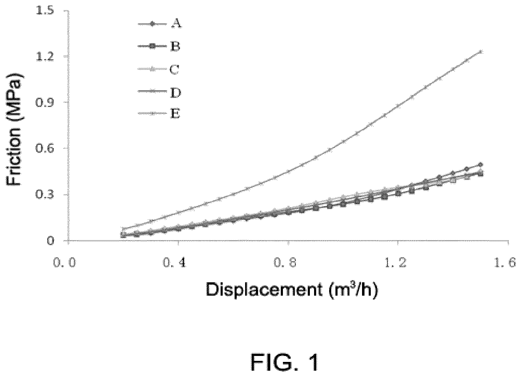

The friction of the slick water obtained in example 1 was tested (25°C) to obtain a curve showing the relationship between friction and displacement as shown in Fig. 1, wherein D is the slick water obtained in example 1. It can be seen from Fig. 1, with the increase of displacement, the friction of the slick water was much lower than that of the clear water, showing that the slick water prepared with the associative polymer has a better friction reduction performance.

The settling velocity of the proppant in the slick water obtained in example 1 was tested and compared with 0.1% by weight of anionic polyacrylamides slick water. 100 ml of slick water was taken by a 100 ml cylinder. 10 carbo medium density ceramic particles of 0.25-0.42 mm (40∼60 mesh) were selected. The settling time of the ceramic particles in the slick water was recorded with a stopwatch, the settling velocity of the ceramic particles was calculated and the result was shown in Table 1. As shown in Table 1, the settling velocity of the ceramic particles in the slick water obtained in example 1 is slower than that in anionic polyacrylamides slick water or clear water, which demonstrated that the slick water obtained in example 1 has a better sand suspending performance than clear water and anionic polyacrylamides slick water.

The settling time of the proppant with different sand ratios in the slick water obtained in example 1 was tested and compared with 0.1% by weight of anionic polyacrylamides slick water. The settling time is used to evaluate the sand suspending performance of slick water. 200 ml slick water was weighed and added into 250 ml beaker and stirred with a vertical stirrer (600rpm/min); carbo medium density ceramic particles (0.25-0.42 mm (40∼60 mesh)) at different sand ratios were measured by cylinder and added into the beaker. After the ceramic particles and slick water were mixed well, stirring was stopped and the time was recorded by a stopwatch to record the time when all particles fell to the bottom of the beaker. The results wee shown in Table 2. It can be shown from Table 2 that the settling time of the proppant with 9% sand ratio in the slick water obtained in example 1 is comparable to that of the proppant with 6% sand ratio in 0.1% by weight of anionic polyacrylamides slick water, which demonstrated that the slick water obtained in example 1 has a better sand suspending performance than 0.1% by weight of anionic polyacrylamides slick water.

### Illustrative Example 2

The associative polymer used as a friction-reducing agent is 0.08% of associative non-crosslinking fracturing thickener GRF-1C by weight percentage, produced by Sichuan Guangya Polymer Chemical Co. Ltd.; the enhancer is 0.2% of GRF-1C by weight percentage; and the clay stabilizer is 1% of KCl by weight percentage.

Water (clear water) for preparing the slick water was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 2∼3min; then the enhancer and clay stabilizer were added, and further stirred for 1∼2min, to obtain the slick water.

The friction of the slick water obtained in example 2 was tested (25°C) to obtain the graph as shown in Fig.1, wherein B is the slick water obtained in example 2.

It can be seen from the figure that, with the increase of displacement, the friction of the slick water prepared with the associative polymer was much lower than that of the clear water, which demonstrated a better friction reduction performance.

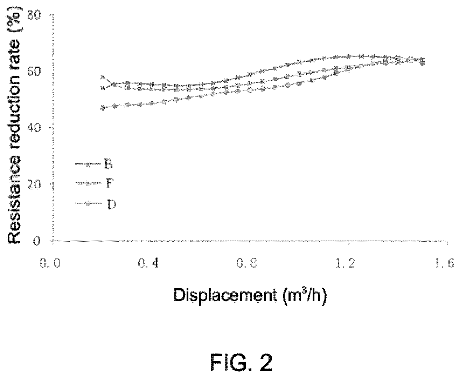

The friction reduction rate at different displacements of the slick water obtained in example 2 was tested (25°C) to obtain the friction reduction rate curve as shown in Fig. 2, wherein B is the slick water obtained in example 2, and D is the 0.1% of anionic polyacrylamides slick water. It can be seen from Fig. 2 that, with the increase of displacement, the friction reduction rate of the slick water prepared with the associative polymer first increased and tended to be gentle, then gradually declined, and the maximum friction reduction rate was 65%. It can also be seen from Fig. 2 that the friction reduction rate of the slick water prepared with the associative polymer is superior to that of anionic polyacrylamides slick water.

The surface tension of the slick water obtained in example 2 was tested, and the result was shown in Table 3.

### Illustrative Example 3

The associative polymer used as a friction-reducing agent is 0.1% by weight of associative non-crosslinking fracturing thickener GRF-1H, produced by Sichuan Guangya Polymer Chemical Co. Ltd.; the enhancer is 0.15% by weight of GRF-2B; and the clay stabilizer is 1% by weight of KCl.

Water (clear water) for preparing the slick water was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 2∼3min; then the enhancer and clay stabilizer were added, and further stirred for 1∼2min, to obtain the slick water.

The friction of the slick water obtained in example 3 was tested (25°C) to obtain the graph showing the relationship between friction and displacement as shown in Fig.1, wherein C is the slick water obtained in example 3, A is the 0.1% of anionic polyacrylamides slick water by weight percentage and E is clear water. It can be known from Fig. 1 that, with the increase of displacement, the friction of the slick water prepared with the associative polymer increased, but the rate of increase was much smaller than that of the clear water. The friction of the slick water prepared with the associative polymer was lower than that of the slick water prepared with the polyacrylamides, thus a better friction reduction performance was achieved.

The settling velocity of the proppant in the slick water obtained in example 3 was tested and compared with 0.1% by weight of anionic polyacrylamides slick water. 100 ml slick water was taken by a 100 ml cylinder. 10 carbo medium density ceramic particles of 0.25-0.42 mm (40∼60 mesh) were selected. The settling time of the ceramic particles in the slick water was recorded with a stopwatch, the settling velocity of the ceramic particles was calculated and the result was shown in Table 1. As shown in Table 1, the settling velocity of the ceramic particles in the slick water obtained in example 3 is slower than that in anionic polyacrylamides slick water or clear water, which demonstrated that the slick water obtained in example 3 has a better sand suspending performance than clear water and anionic polyacrylamides slick water.

The settling time of the proppant with different sand ratios in the slick water obtained in example 3 was tested and compared with 0.1% by weight of anionic polyacrylamides slick water. The settling time is used to evaluate the sand suspending performance of slick water. 200 ml slick water was weighed and added into 250 ml beaker and stirred with a vertical stirrer (600rpm/min); carbo medium density ceramic particles (0.25-0.42 mm (40∼60 mesh)) at different sand ratios were measured by cylinder and added into the beaker. After the ceramic particles and slick water were mixed well, stirring was stopped and the time was recorded by a stopwatch to record the time when all particles fell to the bottom of the beaker. The results wee shown in Table 2. As shown in Table 2, the settling time of the proppant with 9% sand ratio in the slick water obtained in example 3 is comparable to that of the proppant with 6% sand ratio in 0.1% by weight of anionic polyacrylamides slick water, which demonstrated that the slick water obtained in example 3 has a better sand suspending performance than 0.1% by weight of anionic polyacrylamides slick water.

At present, the average sand carrying rate in anionic polyacrylamides slick water is 6%. According to the data in Table 4, the average sand ratio in the slick water prepared by associative polymer can be increased to 9%. Therefore, under the condition of the same addition amount of sand, the amount of sand carrying fluid used can be reduced by 33.3% if the slick water prepared with associative polymer is used to carry sand.

**Table 1. test results of settling velocity of the proppant in different slick water.**

| Slick water | Clear water | Example 3 | Example 1 | 0.1 wt% anionic polyacrylamides slick water |
|---|---|---|---|---|
| Settling velocity mm/s | 100.01 | 5.64 | 6.16 | 17.24 |

**Table 2. Settling time of the proppant with different sand ratios in different slick water.**

| | 0.1 wt% anionic polyacrylamides slick water | Example 3 | | | Example 1 | | |
|---|---|---|---|---|---|---|---|
| Sand ratio (%) | 6 | 6 | 7 | 9 | 6 | 7 | 9 |
| Settling time (s) | 10.09 | 14.55 | 13.43 | 10.19 | 12.21 | 11.5 | 9.89 |

### Illustrative Example 4

The associative polymer used as a friction-reducing agent is 0.08% by weight of associative non-crosslinking fracturing thickener GRF-1C (effective concentration of the associative polymer), produced by Sichuan Guangya Polymer Chemical Co. Ltd.; the enhancer is 0.1% by weight of GRF-2C; and the clay stabilizer is 1% by weight of KCl.

Water (clear water) for preparing the slick water was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 2∼3min; then the enhancer and clay stabilizer were added, and further stirred for 1∼2min, to obtain the slick water.

The surface tension of the slick water obtained in example 4 was tested, and the result was shown in Table 3.

### Illustrative Example 5

The associative polymer used as a friction-reducing agent is 0.08% by weight of associative non-crosslinking fracturing thickener GRF-1C (effective concentration of the associative polymer), produced by Sichuan Guangya Polymer Chemical Co. Ltd.; the enhancer is 0.3% by weight of GRF-2C; and the clay stabilizer is 1% by weight of KCl.

Water (clear water) for preparing the slick water was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, and further stirred for 1∼3min, to obtain the slick water.

The surface tension of the slick water obtained in example 5 was tested, and the result was shown in Table 3. It can be known from Table 1 that with the increase of the amount of the enhancer added, the surface tension of the slick water reduced.

**Table 3. Test results of surface tension of slick water**

| | Example 1A | Example 4 | Example 2 | Example 5 |
|---|---|---|---|---|
| addition amount of the enhancer GRF-2C (wt%) | 0 | 0.1 | 0.2 | 0.3 |
| surface tension (mN/m) | 32.6 | 28.3 | 27.5 | 26.7 |

### Illustrative Example 6

The associative polymer used as a friction-reducing agent is 0.08% by weight of associative non-crosslinking fracturing thickener GRF-1H, produced by Sichuan Guangya Polymer Chemical Co. Ltd.; the enhancer is 0.1% by weight of GRF-2B; and the clay stabilizer is 1% by weight of KCl.

Water (clear water) for preparing the slick water was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 2∼3min; then the enhancer and clay stabilizer were added, and further stirred for 1∼2min, to obtain the slick water.

The surface tension of the slick water obtained in example 6 was tested, and the result was shown in Table 4. It can be known from Table 2 that with the increase of the amount of the enhancer added, the surface tension of the slick water reduced.

### Illustrative Example 7

The associative polymer used as a friction-reducing agent is 0.08% by weight of associative non-crosslinking fracturing thickener GRF-1H, produced by Sichuan Guangya Polymer Chemical Co. Ltd.; the enhancer is 0.2% by weight of GRF-2B; and the clay stabilizer is 1% by weight of KCl.

Water (clear water) for preparing the slick water was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 2∼3min; then the enhancer and clay stabilizer were added, and further stirred for 1∼2min, to obtain the slick water.

The surface tension of the slick water obtained in example 7 was tested, and the result was shown in Table 4. It can be known from Table 2 that with the increase of the amount of the enhancer added, the surface tension of the slick water reduced.

### Illustrative Example 8

The associative polymer used as a friction-reducing agent is 0.08% by weight of associative non-crosslinking fracturing thickener GRF-1H, produced by Sichuan Guangya Polymer Chemical Co. Ltd.; the enhancer is 0.3% by weight of GRF-2B; and the clay stabilizer is 1% by weight of KCl.

Water (clear water) for preparing the slick water was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 2∼3min; then the enhancer and clay stabilizer were added, and further stirred for 1∼2min, to obtain the slick water.

The surface tension of the slick water obtained in example 8 was tested, and the result was shown in Table 4. It can be known from Table 2 that with the increase of the amount of the enhancer added, the surface tension of the slick water reduced.

**Table 4. Test results of surface tension of the slick water**

| | Example 1A | Example 6 | Example 7 | Example 8 |
|---|---|---|---|---|
| addition amount of the enhancer GRF-2B (wt%) | 0 | 0.1 | 0.2 | 0.3 |
| surface tension (mN/m) | 32.6 | 27.3 | 26.5 | 25.7 |

### Illustrative Example 9

The associative polymer used as a friction-reducing agent is 0.06% by weight of associative non-crosslinking fracturing thickener GRF-1C, produced by Sichuan Guangya Polymer Chemical Co. Ltd.; the enhancer is 0.15% by weight of GRF-2C; and the clay stabilizer is 1% by weight of KCl.

Water for preparing the slick water (flowback liquid after treatment) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 2∼3min; then the enhancer and clay stabilizer were added, and further stirred for 1∼2min, to obtain the slick water.

The friction reduction rate at different displacements of the slick water obtained in example 9 was tested (25°C) to obtain the friction reduction rate curve as shown in Fig. 2, wherein F is the slick water obtained in example 9. It can be seen from Fig. 2 that, the friction reduction rate of the slick water obtained in example 9 first increased and then tended to be gentle, and the maximum friction reduction rate was 64%. It can also be seen from Fig. 2 that the friction reduction rate of the slick water obtained in example 9 is higher than that of anionic polyacrylamides slick water, and is substantively in line with that of the slick water prepared with clear water.

### Illustrative Example 10

The associative polymer used as a friction-reducing agent is 0.06% by weight of associative non-crosslinking fracturing thickener GRF-1C, produced by Sichuan Guangya Polymer Chemical Co. Ltd.; the enhancer is 0.15% by weight of GRF-2C; and the clay stabilizer is 0.5% by weight of KCl.

Water for preparing the slick water (flowback liquid after treatment) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 2∼3min; then the enhancer and clay stabilizer were added, and further stirred for 1∼2min, to obtain the slick water.

The friction reduction rate of the slick water obtained in example 10 was tested. The friction reduction rates tested were basically the same as the friction reduction rate of the slick water obtained in example 2. Table 5 is the composition list of the friction reduction waters having basically the same friction reduction rate.

It can be seen from Table 5 that when flowback liquid is used to prepare the friction reduction water, the addition amount of the additives decreased in varying degrees.

**Table 5. Composition list of the friction reduction water with the same friction reduction rate**

| | water for preparation | associative polymer GRF-1C | enhancer GRF-2C | KCl | note |
|---|---|---|---|---|---|
| Example 2 | clear water | 0.8 t | 2 t | 10 t | note: to prepare 1000m³ slick water as an example |
| Example 11 | Flowback liquid after treatment | 0.6 t | 1.5 t | 5 t | |
| | reduction rate, % | 25% | 25% | 50% | |

### Example 11

The associative polymer thickener is 0.4% by weight of hydrophobically modified hydroxyethyl cellulose; the enhancer is 0.15% by weight of sodium dodecylbenzenesulfonate; and the clay stabilizer is 1% by weight of KCl.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, further stirred for 2∼3min, stirred evenly to obtain the high viscosity sand carrying fluid.

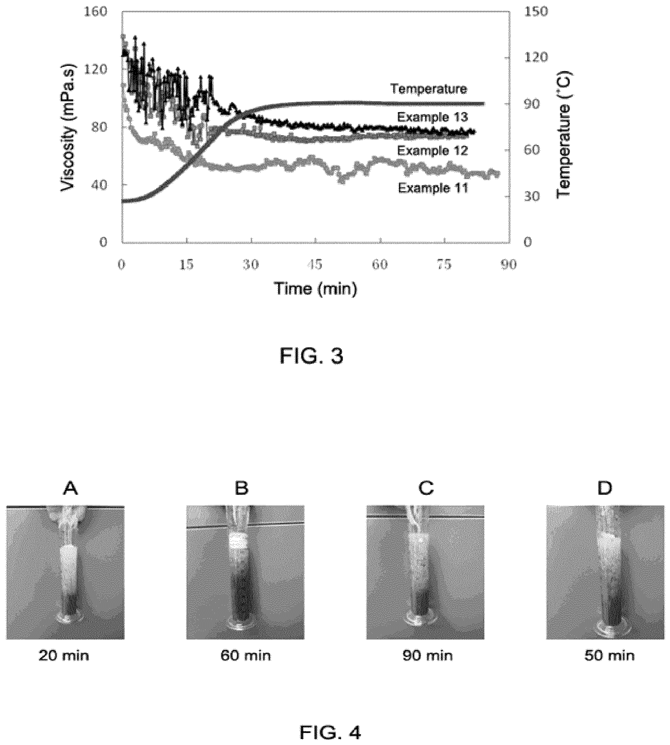

The shearing resistance of the high viscosity sand carrying fluid obtained in example 11 was tested. Huck RS6000 rheometer was used, and the shearing resistance of the sand carrying fluid was tested under the condition of 90°C, 170 s⁻¹. A shearing resistance curve as showed in FIG. 3 was obtained, wherein a is the high viscosity sand carrying fluid obtained in example 11. It can be known from Fig. 3 that, when the temperature was constant, along with the shearing process, the viscosity of the high viscosity sand carrying fluid basically did not change, showing that the high viscosity sand carrying fluid has a better shearing resistance performance.

0.1% of oxidative gel breaker ammonium persulfate was added to the high viscosity sand carrying fluid obtained in example 11. The residue amount of the high viscosity sand carrying fluid obtained in example 11 was tested, and the result was shown in Table 6. It can be known from Table 6 that the residue amount of the high viscosity sand carrying fluid obtained in example 11 was low, showing that the high viscosity sand carrying fluid obtained in example 11 has characteristics of low residue and cleanness.

Core matrix damage rate of the high viscosity sand carrying fluid obtained in example 11 was tested and result was shown in Table 7. It can be known from Table 7 that the high viscosity sand carrying fluid obtained in example 11 has low core matrix damage rate, showing that it has a characteristic of low damage.

### Illustrative Example 12

The associative polymer thickener is 0.37% by weight of associative non-crosslinking fracturing thickener GRF-1H, produced by Sichuan Guangya Polymer Chemical Co. Ltd.; the enhancer is 0.12% by weight of GRF-2B; and the clay stabilizer is 1% by weight of KCl.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, further stirred for 2∼3min, stirred evenly to obtain the high viscosity sand carrying fluid.

The shearing resistance of the high viscosity sand carrying fluid obtained in example 12 was tested. Huck RS6000 rheometer was used, and the shearing resistance of the sand carrying fluid was tested under the condition of 90°C, 170 s⁻¹. A shearing resistance curve as showed in Fig. 3 was obtained, wherein C is the high viscosity sand carrying fluid obtained in example 12. It can be known from Fig. 3 that, when the temperature was constant, along with the shearing process, the viscosity of the high viscosity sand carrying fluid basically did not change, showing that the high viscosity sand carrying fluid has a better shearing resistance performance.

The static suspending performance of the high viscosity sand carrying fluid obtained in example 12 was tested. 30ml of carbo medium density ceramic particles (0.42-0.841 mm (20∼40 mesh)) were mixed evenly with 100ml of the high viscosity sand carrying fluid obtained in example 12, and transferred to a cylinder with plug. The cylinder was placed in an oven at 90°C constant temperature and kept warm. The settling times of ceramic particles were observed and result was shown in Fig. 4.C. It can be known from Fig. 4 that the addition of enhancer can increase the sand suspending performance of the high viscosity sand carrying fluid.

### Illustrative Example 13

The associative polymer thickener is 0.4% by weight of associative non-crosslinking fracturing thickener GRF-1C (effective concentration of the associative polymer), produced by Sichuan Guangya Polymer Chemical Co. Ltd.; the enhancer is 0.35% by weight of GRF-2C; and the clay stabilizer is 1% by weight of KCl.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, further stirred for 2∼3min, stirred evenly to obtain the high viscosity sand carrying fluid.

The shearing resistance of the high viscosity sand carrying fluid obtained in example 13 was tested. Huck RS6000 rheometer was used, and the shearing resistance of the sand carrying fluid was tested under the condition of 90°C, 170 s⁻¹. A shearing resistance curve as showed in Fig. 3 was obtained, wherein C is the high viscosity sand carrying fluid obtained in example 13. It can be known from Fig. 3 that, when the temperature was constant, along with the shearing process, the viscosity of the high viscosity sand carrying fluid basically did not change, showing that the high viscosity sand carrying fluid has a better shearing resistance performance.

0.1% of oxidative gel breaker ammonium persulfate was added to the high viscosity sand carrying fluid obtained in example 13. The residue amount of the high viscosity sand carrying fluid obtained in example 13 was tested. The result was shown in Table 6. It can be known from Table 6 that the residue amount of the high viscosity sand carrying fluid obtained in example 13 was low, showing that the high viscosity sand carrying fluid obtained in example 13 has characteristics of low residue and cleanness.

Core matrix damage rate of the high viscosity sand carrying fluid obtained in example 13 was tested and result was shown in Table 7. It can be known from Table 7 that the high viscosity sand carrying fluid obtained in example 13 has low core matrix damage rate, showing that it has a characteristic of low damage.

### Illustrative Example 14

The associative polymer thickener is 0.37% by weight of associative non-crosslinking fracturing thickener GRF-1H, produced by Sichuan Guangya Polymer Chemical Co. Ltd.; the enhancer is 0.15% by weight of GRF-2B; the clay stabilizer is 1% by weight of KCl; and the oxidative gel breaker is 0.15% by weight of ammonium persulfate.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, further stirred for 2∼3min, stirred evenly to obtain the sand carrying fluid.

The static suspending performance of the high viscosity sand carrying fluid obtained in example 14 was tested. 30ml of carbo medium density ceramic particles (0.42-0.841 mm (20∼40 mesh)) were mixed evenly with 100ml of the high viscosity sand carrying fluid obtained in example 14, and transferred to a cylinder with plug. The cylinder was placed in an oven at 90°C constant temperature and kept warm. The settling times of ceramic particles were observed and result was shown in Fig. 4.D. It can be known from Fig. 4 that the addition of enhancer can increase the sand suspending performance of the sand carrying fluid. With the increase of the addition amount of the enhancer, the static sand suspending performance of the high viscosity sand carrying fluid first enhanced and then attenuated.

### Illustrative Example 15

The associative polymer thickener is 0.4% by weight of associative non-crosslinking fracturing thickener GRF-1C (effective concentration of the associative polymer), produced by Sichuan Guangya Polymer Chemical Co. Ltd.; the enhancer is 0.2% by weight of GRF-2C; and the clay stabilizer is 1% by weight of KCl.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, further stirred for 2∼3min, stirred evenly to obtain the high viscosity sand carrying fluid.

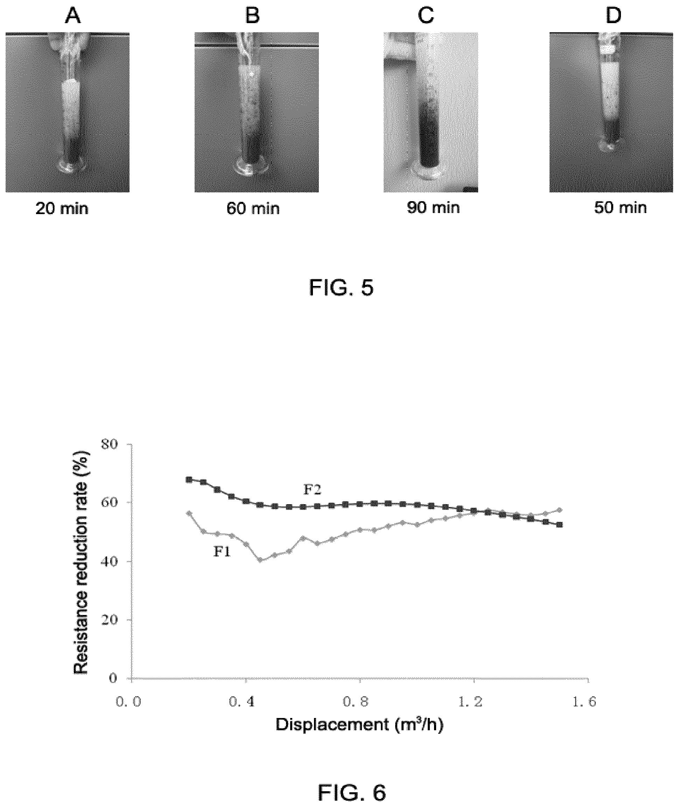

The static suspending performance of the sand carrying fluid obtained in example 15 was tested. 30ml of carbo medium density ceramic particles (0.42-0.841 mm (20∼40 mesh)) were mixed evenly with 100ml of the high viscosity sand carrying fluid obtained in example 15, and transferred to a cylinder with plug. The cylinder was placed in an oven at 90°C constant temperature and kept warm. The settling times of ceramic particles were observed and result was shown in FIG. 5.B. It can be known from Fig. 5 that the addition of enhancer can increase the sand suspending performance of the sand carrying fluid.

### Illustrative Example 16

The associative polymer thickener is 0.4% by weight of associative non-crosslinking fracturing thickener GRF-1C (effective concentration of the associative polymer), produced by SiChuan Guangya Polymer Chemical Co. Ltd.; the enhancer is 0.3% by weight of GRF-2C; and the clay stabilizer is 1% by weight of KCl.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, further stirred for 2∼3min, stirred evenly to obtain the sand carrying fluid.

The static suspending performance of the sand carrying fluid obtained in example 16 was tested. 30ml of carbo medium density ceramic particles (0.42-0.841 mm (20∼40 mesh)) were mixed evenly with 100ml of the sand carrying fluid obtained in example 16, and transferred to a cylinder with plug. The cylinder was placed in an oven at 90°C constant temperature and kept warm. The settling times of ceramic particles were observed and result was shown in Fig. 5.C. It can be known from Fig. 5 that the addition of enhancer can increase the sand suspending performance of the sand carrying fluid. With the increase adding amount of enhancer, the static sand suspending performance of the high viscosity sand carrying fluid first enhanced and then attenuated.

### Example 17

The associative polymer thickener is 0.4% by weight of hydrophobically modified hydroxyethyl cellulose; the enhancer is 0.15% of sodium dodecylbenzenesulfonate by weight percentage; the clay stabilizer is 1% by weight of KCl; and the oxidative gel breaker is 0.15% by weight of ammonium persulfate.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, further stirred for 2∼3min, stirred evenly to obtain the sand carrying fluid.

The friction reduction rate at different displacements of the sand carrying fluid obtained in example 17 was tested. The friction reduction rate curve obtained is shown as Fig. 6, wherein F1 is the sand carrying fluid obtained in example 17. It can be seen from Fig. 6, at high displacement, the friction reduction rate of the sand carrying fluid obtained in example 17 was greater than 50%, showing a low friction characteristic.

### Example 18

The associative polymer thickener is 0.35% by weight of hydrophobically modified hydroxyethyl cellulose by weight; the enhancer is 0.1% by weight of sodium dodecylbenzenesulfonate; the clay stabilizer is 1% by weight of KCl; and the oxidative gel breaker is 0.15% by weight of ammonium persulfate.

Water for preparing the high viscosity sand carrying fluid (flowback liquid after treatment) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, further stirred for 2∼3min, stirred evenly to obtain the sand carrying fluid.

The friction reduction rate at different displacements of the sand carrying fluid obtained in example 18 was tested. The friction reduction rate curve obtained is shown as Fig. 6, wherein F2 is the sand carrying fluid obtained in example 18. It can be seen from Fig. 6, at high displacement, the friction reduction rate of the sand carrying fluid obtained in example 18 was greater than 50%, showing a low friction characteristic.

### Illustrative Example 19

The associative polymer thickener is 0.35% by weight of associative non-crosslinking fracturing thickener GRF-1H, produced by Sichuan Guangya Polymer Chemical Co. Ltd.; the enhancer is 0.1% by weight of GRF-2B; and the clay stabilizer is 0.5% by weight of KCl.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, further stirred for 2∼3min, stirred evenly to obtain the high viscosity sand carrying fluid.

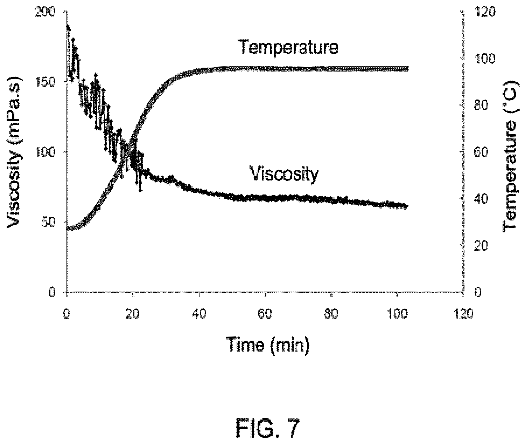

The shearing resistance of the high viscosity sand carrying fluid obtained in example 19 was tested. Huck RS6000 rheometer was used, and the shearing resistance of the sand carrying fluid was tested under the condition of 90°C, 170 s⁻¹. A shearing resistance curve as showed in Fig. 7 was obtained. It can be known from Fig. 7 that, when the temperature was constant, along with the shearing process, the viscosity of the sand carrying fluid basically did not change, showing that the high viscosity sand carrying fluid has a better shearing resistance performance.

### Illustrative Example 20

The associative polymer thickener is 0.37% by weight of associative non-crosslinking fracturing thickener GRF-1C (effective concentration of the associative polymer), produced by Sichuan Guangya Polymer Chemical Co. Ltd.; the enhancer is 0.28% by weight of GRF-2C; the clay stabilizer is 0.5% by weight of KCl; and the oxidative gel breaker is 0.15% by weight of ammonium persulfate.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, further stirred for 2∼3min, stirred evenly to obtain the high viscosity sand carrying fluid.

The residue amount of the high viscosity sand carrying fluid obtained in example 20 was tested and the result was shown in Table 6. The residue amount of the high viscosity sand carrying fluid obtained in example 20 was low, showing that the high viscosity sand carrying fluid obtained in example 20 has characteristics of low residue and cleanness.

**Table 6. Test results of the residue amount of the sand carrying fluids.**

| Sand carrying fluid | Residue amount, mg/L | Average residue amount, mg/L |
|---|---|---|
| Example 11 | 34.6 | 37.6 |
| Example 13 | 38.7 | |
| Example 20 | 39.5 | |

Core matrix damage rate of the high viscosity sand carrying fluid obtained in example 20 was tested and the result was shown in Table 7. It can be known from Table 7 that the high viscosity sand carrying fluid obtained in example 20 has low core matrix damage rate, showing that it has a characteristic of low damage.

**Table 7. test results of matrix damage rate of the sand carrying fluids.**

| Sand carrying fluid | Core matrix size (d-L) (cm-cm) | Permeability (10⁻³um²) | | Damage rate (%) |
|---|---|---|---|---|
| | | Permeability before damage K₁ | Permeability after damage K₂ | |
| Example 11 | H₁₋₁ (2.6987-7.591) | 1.537 | 1.416 | 7.9 |
| Example 13 | H₁₋₁ (2.6987-7.392) | 1.231 | 1.161 | 5.6 |
| Example 20 | H₃₋₃ (2.6987-7.450) | 0.892 | 0.808 | 9.4 |

### Illustrative Example 1A

The associative polymer used as a resistance reducing agent is 0.08% by weight of associative non-crosslinking fracturing thickener GRF-1C (effective concentration of the associative polymer), produced by Sichuan Guangya Polymer Chemical Co. Ltd.; and the clay stabilizer is 1% by weight of KC1.

Water for preparing the slick water (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, and further stirred for 2∼3min, to obtain the slick water.

The surface tension of the slick water obtained in Illustrative example 1A was tested, and the result was shown in Table 3.

### Illustrative Example 2A

The associative polymer thickener is 0.37% by weight of associative non-crosslinking fracturing thickener GRF-1H, produced by SiChuan Guangya Polymer Chemical Co. Ltd.; and the clay stabilizer is 1% by weight of KCl.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, and further stirred for 2∼3 min, stirred evenly to obtain the high viscosity sand carrying fluid.

The static suspending performance of the high viscosity sand carrying fluid obtained in example 2A was tested. 30ml of carbo medium density ceramic particles (0.42-0.841 mm (20∼40 mesh)) were mixed evenly with 100ml of the sand carrying fluid obtained in illustrative example 2A, and transferred to a cylinder with plug. The cylinder was placed in an oven at 90°C constant temperature and kept warm. The settling times of ceramic particles were observed and the result was shown in Fig. 4.A. It can be known from Fig. 4 that the addition of enhancer can increase the sand suspending performance of the sand carrying fluid. With the increase adding amount of enhancer, the static sand suspending performance of the high viscosity sand carrying fluid first enhanced and then attenuated.

### Illustrative Example 3A

The associative polymer thickener is 0.37% by weight of associative non-crosslinking fracturing thickener GRF-1H, produced by SiChuan Guangya Polymer Chemical Co. Ltd.; the enhancer is 0.08% by weight of GRF-2B; and the clay stabilizer is 1% by weight of KCl.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, and further stirred for 2∼3min, stirred evenly to obtain the high viscosity sand carrying fluid.

The static suspending performance of the high viscosity sand carrying fluid obtained in illustrative example 3A was tested. 30ml of carbo medium density ceramic particles (0.42-0.841 mm (20∼40 mesh)) were mixed evenly with 100ml of the sand carrying fluid obtained in illustrative example 3A, and transferred to a cylinder with plug. The cylinder was placed in an oven at 90°C constant temperature and kept warm. The settling times of ceramic particles were observed and the result was shown in Fig. 4.B. It can be known from Fig. 4 that the addition of enhancer can increase the sand suspending performance of the sand carrying fluid. With the increase adding amount of enhancer, the static sand suspending performance of the sand carrying fluid first enhanced and then attenuated.

### Illustrative Example 4A

The associative polymer thickener is 0.4% by weight of associative non-crosslinking fracturing thickener GRF-1C (effective concentration of the associative polymer), produced by SiChuan Guangya Polymer Chemical Co. Ltd.; and the clay stabilizer is 1% by weight of KCl.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, and further stirred for 2∼3min, stirred evenly to obtain the high viscosity sand carrying fluid.

The static suspending performance of the high viscosity sand carrying fluid obtained in illustrative example 4A was tested. 30ml of carbo medium density ceramic particles (0.42-0.841 mm (20∼40 mesh)) were mixed evenly with 100ml of the sand carrying fluid obtained in illustrative example 4A, and transferred to a cylinder with plug. The cylinder was placed in an oven at 90°C constant temperature and kept warm. The settling times of ceramic particles were observed and the result was shown in Fig. 5.A. It can be known from Fig. 5 that the addition of enhancer can increase the sand suspending performance of the sand carrying fluid.

### Illustrative Example 5A

The associative polymer thickener is 0.4% by weight of associative non-crosslinking fracturing thickener GRF-1C, produced by SiChuan Guangya Polymer Chemical Co. Ltd.; the enhancer is 0.4% by weight of GRF-2C; and the clay stabilizer is 1% by weight of KCl.

Water for preparing the high viscosity sand carrying fluid (clear water) was weighted by a balance and added into a stirrer. The speed of the stirrer was adjusted until the bottom axle of the stirrer can be seen. Then the associative polymer was added slowly into the stirrer to ensure that the associative polymer was dispersed evenly without agglomeration phenomenon, stirred for 4∼5min; then the enhancer and clay stabilizer were added, and further stirred for 2∼3 min, stirred evenly to obtain the high viscosity sand carrying fluid.

The static suspending performance of the high viscosity sand carrying fluid obtained in illustrative example 4A was tested. 30ml of carbo medium density ceramic particles (0.42-0.841 mm (20∼40 mesh)) were mixed evenly with 100ml of the sand carrying fluid obtained in illustrative example 5A, and transferred to a cylinder with plug. The cylinder was placed in an oven at 90°C constant temperature and kept warm. The settling times of ceramic particles were observed and the result was shown in Fig. 5.D. It can be known from Fig. 5 that the addition of enhancer can increase the sand suspending performance of the sand carrying fluid. With the increase adding amount of enhancer, the static sand suspending performance of the sand carrying fluid first enhanced and then attenuated.

## Claims

1. A multi-functional hybrid fracturing fluid system, **characterized in that**, it comprises slick water and high viscosity sand carrying fluid,
wherein the slick water comprises 0.02%∼0.15% of friction-reducing agent, 0.05%∼0.3% of enhancer, 0.2%∼2% of clay stabilizer by mass percentage and water solvent as the balance;
the high viscosity sand carrying fluid comprises 0.2%∼0.75% of thickener, 0.1%∼0.4% of enhancer, 0.3%∼2% of clay stabilizer, and 0.03%∼0.4% of gel breaker by mass percentage, and water solvent as the balance;
the friction-reducing agent and the thickener are the same associative polymer which is a modified natural associative polymer and/or an organic synthetic associative polymer;
the modified natural associative polymer is one or more of hydrophobically modified cellulose polymers, hydrophobically modified starch polymers and hydrophobically modified xanthan gum;
the organic synthetic associative polymer is hydrophobically modified polyacrylamide and/or derivatives thereof;
the enhancer in the slick water and the enhancer in the high viscosity sand carrying fluid is each independently one or more of anionic surfactants and nonionic surfactants; and
the water solvent in the slick water and the water solvent in the high viscosity sand carrying fluid is each independently clear water or flowback liquid after treatment.

2. The multi-functional hybrid fracturing fluid system of claim 1, **characterized in that**,
the anionic surfactant is one or more of alkyl benzene sulfonate salts, alkyl sulfate salts and petroleum sulfonate salts; and
the nonionic surfactant is one or more of fatty acid polyoxyethylene ester, nonylphenol polyoxyethylene ether and fatty alcohol polyoxyethylene ether.

3. The multi-functional hybrid fracturing fluid system of claim 1, **characterized in that**, the clay stabilizer in the slick water and the clay stabilizer in the high viscosity sand carrying fluid is each independently one or more of potassium chloride, ammonium chloride and non-ionic organic clay stabilizers.

4. The multi-functional hybrid fracturing fluid system of claim 1, **characterized in that**, the gel breaker in the high viscosity sand carrying fluid is one or more of potassium persulfate, ammonium persulfate and encapsulated oxidative gel breaker.

5. The multi-functional hybrid fracturing fluid system of claim 1, **characterized in that**, the slick water comprises 0.04%∼0.15% of association polymer, 0.1%∼0.3% of enhancer, 0.3%∼2% of clay stabilizer by mass percentage, and clear water as the balance.

6. The multi-functional hybrid fracturing fluid system of claim 1, **characterized in that**, by mass percentage, the slick water comprises 0.08% of associative polymer, 0.2% of enhancer, 1% of clay stabilizer by mass percentage, and clear water as the balance.

7. The multi-functional hybrid fracturing fluid system of claim 1, **characterized in that**, the slick water comprises 0.02%∼0.1% of associative polymer, 0.05%∼0.25% of enhancer, 0.2%∼1.5% of clay stabilizer by mass percentage, and flowback liquid after treatment as the balance.

8. The multi-functional hybrid fracturing fluid system of claim 1, **characterized in that**, the high viscosity sand carrying fluid comprises 0.25%∼0.75% of associative polymer, 0.15%∼0.4% of enhancer, 0.3%∼2% of clay stabilizer, 0.03%∼0.4% of oxidative gel breaker by mass percentage, and clear water as the balance.

9. The multi-functional hybrid fracturing fluid system of claim 1, **characterized in that**, the high viscosity sand carrying fluid comprises 0.35% of associative polymer, 0.2% of enhancer, 1% of clay stabilizer, 0.15% of oxidative gel breaker by mass percentage, and clear water as the balance.

10. The multi-functional hybrid fracturing fluid system of claim 1, **characterized in that**, the high viscosity sand carrying fluid comprises 0.2%∼0.65% of associative polymer, 0.1%∼0.3% of enhancer, 0.3%∼1.5% of clay stabilizer, 0.03%∼0.4% of oxidative gel breaker by mass percentage, and flowback liquid after treatment as the balance.

11. Use of the multi-functional hybrid fracturing fluid system of any one of claims 1 to 10 for fracturing of tight hydrocarbon reservoirs and shale hydrocarbon reservoirs.

## Patentansprüche

1. Ein multifunktionelles Hybridfrakturierungsfluidsystem, **dadurch gekennzeichnet, dass** es Schlickwasser und sandführendes Hochviskositätsfluid umfasst, wobei
- das Schlickwasser 0,02%∼0,15% reibungsreduzierendes Mittel, 0,05%∼0,3% Verstärker, 0,2%∼2% Tonstabilisator, auf den Masseprozentsatz bezogen, und Wasserlösungsmittel als Rest umfasst;
- das sandführende Hochviskositätsfluid 0,2%∼0,75% Verdickungsmittel, 0,1%∼0,4% Verstärker, 0,3%∼2% Tonstabilisator und 0,03%∼0,4% Gelbrecher, auf den Masseprozentsatz bezogen, und Wasserlösungsmittel als Rest umfasst;
- das reibungsreduzierende Mittel und das Verdickungsmittel dasselbe assoziative Polymer sind, das ein modifiziertes, natürliches, assoziatives Polymer und/oder ein organisches, synthetisches, assoziatives Polymer ist;
- das modifizierte, natürliche, assoziative Polymer eines oder mehrere von hydrophob modifizierten Cellulosepolymeren, hydrophob modifizierten Stärkepolymeren und hydrophob modifiziertem Xanthangummi ist/sind;
- das organische, synthetische, assoziative Polymer hydrophob modifiziertes Polyacrylamid und/oder Derivate davon ist;
- der Verstärker in dem Schlickwasser und der Verstärker in dem sandführenden Hochviskositätsfluid jeweils unabhängig ein oder mehrere von anionischen Tensiden und nichtionischen Tensiden sind; und
- das Wasserlösungsmittel in dem Schlickwasser und das Wasserlösungsmittel in dem sandführenden Hochviskositätsfluid jeweils unabhängig klares Wasser oder Rückflussflüssigkeit nach Behandlung sich sind.

2. Der multifunktionelles Hybridfrakturierungsfluidsystem nach Anspruch 1, **dadurch gekennzeichnet, dass**
- das anionische Tensid eines oder mehrere von Alkylbenzolsulfonatsalzen, Alkylsulfatsalzen und Petroleumsulfonatsalzen ist; und
- das nichtionischen Tensid eines oder mehrere von sind Fettsäurepolyoxyethylenester, onylphenolpolyoxyethylenether und Fettalkoholpolyoxyethylenether ist.

3. Der multifunktionelles Hybridfrakturierungsfluidsystem nach Anspruch 1, **dadurch gekennzeichnet, dass** der Tonstabilisator in dem Schlickwasser und der Tonstabilisator in dem sandführenden Hochviskositätsfluid jeweils unabhängig eines oder mehrere von Kaliumchlorid, Ammoniumchlorid und nichtionischen organischen Tonstabilisatoren sind.

4. Der multifunktionelles Hybridfrakturierungsfluidsystem nach Anspruch 1, **dadurch gekennzeichnet, dass** der Gelbrecher in dem sandführenden Hochviskositätsfluid eines oder mehrere von Kaliumpersulfat, Ammoniumpersulfat und verkapseltem oxidativem Gelbrecher ist.

5. Der multifunktionelles Hybridfrakturierungsfluidsystem nach Anspruch 1, **dadurch gekennzeichnet, dass** das Schlickwasser 0,04%∼0,15% Assoziationspolymer, 0,1%∼0,3 Verstärker, 0,3%∼2% Tonstabilisator, auf ich den Masseprozentsatz bezogen, und klares Wasser als Rest umfasst.

6. Der multifunktionelles Hybridfrakturierungsfluidsystem nach Anspruch 1, **dadurch gekennzeichnet dass**, auf den Masseprozentsatz bezogen, das Schlickwasser 0,08% assoziatives Polymer, 0,2% Verstärker, 1% Tonstabilisator, auf den Masseprozentsatz bezogen, und klares Wasser als Rest umfasst.

7. Der multifunktionelles Hybridfrakturierungsfluidsystem nach Anspruch 1, **dadurch gekennzeichnet, dass** das Schlickwasser 0,02%∼0,1% assoziatives Polymer, 0,05%∼0,25 Verstärker, 0,2%∼1,5% Tonstabilisator, auf den Masseprozentsatz bezogen, und r nach Behandlung Rückspülwasse als Rest umfasst.

8. Der multifunktionelles Hybridfrakturierungsfluidsystem nach Anspruch 1, **dadurch gekennzeichnet, dass** das sandführende Hochviskositätsfluid 0,25%∼0,75% assoziatives Polymer, 0,15%∼0,4% Verstärker, 0,3%∼2% Tonstabilisator, 0,03%∼0,4% oxidativen Gelbrecher, auf den Masseprozentsatz bezogen, und klares Wasser als Rest umfasst.

9. Der multifunktionelles Hybridfrakturierungsfluidsystem nach Anspruch 1, **dadurch gekennzeichnet, dass** das sandführende Hochviskositätsfluid 0,35% assoziatives Polymer, 0,2% Verstärker, 1% Tonstabilisator, 0,15% oxidativen Gelbrecher, auf den Masseprozentsatz bezogen, und klares Wasser als Rest umfasst.

10. Der multifunktionelles Hybridfrakturierungsfluidsystem nach Anspruch 1, **dadurch gekennzeichnet, dass** das sandführende Hochviskositätsfluid 0,2%∼0,65% assoziatives Polymer, 0,1%∼0,3 Verstärker, 0,3%∼1,5% Tonstabilisator, 0,03%∼0,4% oxidativen Gelbrecher, auf den Masseprozentsatz bezogen, und Rückflussflüssigkeit nach Behandlung als Rest umfasst.

11. Verwendung des multifunktionellen Hybridfrakturierungsfluidsystems nach einem der Ansprüche 1 bis 10 zum Frakturieren von dichten Kohlenwasserstoffreservoirs und Schieferkohlenwasserstoffreservoirs.

## Revendications

1. Un système hybride multifonctionnel de fluides de fracturation, **caractérisé en ce qu'**il comprend une nappe d'eau et un fluide porteur de sable à haute viscosité,
dans lequel la nappe d'eau comprend 0,02 %∼0,15 % d'agent réducteur de friction, 0,05 %∼0,3 % d'activateur, 0,2 %∼2 % de stabilisateur d'argile en pourcentage massique et de l'eau solvant pour le reste ;
le fluide porteur de sable à haute viscosité comprend 0,2 %∼0,75 % d'épaississant, 0,1%∼0,4 % d'activateur, 0,3 %∼2 % de stabilisateur d'argile, et 0,03 %∼0,4 % de briseur de gel en pourcentage massique, et de l'eau solvant pour le reste;
l'agent réducteur de friction et l'épaississant sont le même polymère associatif qui est un polymère associatif naturel modifié et/ou un polymère associatif synthétique organique ;
le polymère associatif naturel modifié est un ou plusieurs des polymères de cellulose modifiés de façon hydrophobe, des polymères d'amidon modifiés de façon hydrophobe et de la gomme de xanthane modifiée de façon hydrophobe ;
le polymère associatif synthétique organique est un polyacrylamide hydrophobe modifié et/ou ses dérivés ;
l'activateur dans la nappe d'eau et l'activateur dans le fluide porteur de sable à haute viscosité sont chacun, indépendamment, un ou plusieurs tensioactifs anioniques et tensioactifs non ioniques ; et
l'eau solvant dans la nappe d'eau et l'eau solvant dans le fluide porteur de sable à haute viscosité sont chacun, indépendamment, choisi parmi l'eau claire ou le liquide de retour après traitement.

2. Le système hybride multifonctionnel de fluides de fracturation selon la revendication 1, **caractérisé en ce que**,
le tensioactif anionique représente un ou plusieurs éléments choisis parmi les sels de sulfonate d'alkylbenzène, les sels de sulfate d'alkyle et les sels de sulfonate de pétrole ; et
le tensioactif non ionique représente un ou plusieurs éléments choisis parmi l'ester polyoxyéthylénique d'acide gras, l'éther polyoxyéthylénique de nonylphénol et l'éther polyoxyéthylénique d'alcool gras.

3. Système hybride multifonctionnel de fluides de fracturation selon la revendication 1, **caractérisé en ce que**, le stabilisateur d'argile dans la nappe d'eau et le stabilisateur d'argile dans le fluide porteur de sable à haute viscosité sont chacun indépendamment un ou plusieurs stabilisateurs choisis parmi le chlorure de potassium, le chlorure d'ammonium et l'argile organique non ionique.

4. Système hybride multifonctionnel de fluides de fracturation selon la revendication 1, **caractérisé en ce que** le briseur de gel dans le fluide porteur de sable à haute viscosité est un ou plusieurs éléments choisis parmi le persulfate de potassium, le persulfate d'ammonium et le briseur de gel oxydatif encapsulé.

5. Le système hybride multifonctionnel de fluides de fracturation de la revendication 1, **caractérisé en ce que**, la nappe d'eau comprend 0,04%∼0,15% de polymère d'association, 0,1%∼0,3% d'activateur, 0,3%∼2% de stabilisateur d'argile en pourcentage massique, et de l'eau claire pour le reste.

6. Système hybride multifonctionnel de fluides de fracturation selon la revendication 1, **caractérisé en ce que**, en pourcentage massique, la nappe d'eau comprend 0,08 % de polymère associatif, 0,2 % d'activateur, 1 % de stabilisateur d'argile en pourcentage massique, et de l'eau claire pour le reste.

7. Le système hybride multifonctionnel de fluides de fracturation de la revendication 1, **caractérisé en ce que** nappe d'eau comprend 0,02 %∼0,1 % de polymère associatif, 0,05 %∼0,25 % d'activateur, 0,2 %∼1,5 % de stabilisateur d'argile en pourcentage massique, et un liquide de retour après traitement pour le reste.

8. Système hybride multifonctionnel de fluides de fracturation selon la revendication 1, **caractérisé en ce que** le fluide porteur de sable à haute viscosité comprend 0,25 %∼0,75 % de polymère associatif, 0,15%∼0,4 % d'activateur, 0,3 %∼2 % de stabilisateur d'argile, 0,03 %∼0,4 % de briseur de gel oxydatif en pourcentage massique, et de l'eau claire pour le reste.

9. Système hybride multifonctionnel de fluides de fracturation selon la revendication 1, **caractérisé en ce que** le fluide porteur de sable à haute viscosité comprend 0,35 % de polymère associatif, 0,2 % d'activateur, 1 % de stabilisateur d'argile, 0,15 % de briseur de gel oxydatif en pourcentage massique, et de l'eau claire pour le reste.

10. Système hybride multifonctionnel de fluides de fracturation selon la revendication 1, **caractérisé en ce que** le fluide porteur de sable à haute viscosité comprend 0,2 %∼0,65 % de polymère associatif, 0,1%∼0,3 % d'activateur, 0,3 %∼1,5 % de stabilisateur d'argile, 0,03 %∼0,4 % de briseur de gel oxydatif en pourcentage massique, et un liquide de retour après traitement pour le reste.

11. Utilisation du système hybride multifonctionnel de fluides de fracturation selon l'une quelconque des revendications 1 à 10 pour la fracturation des réservoirs d'hydrocarbures étanches et des réservoirs d'hydrocarbures de schiste.
